# EUROPÄISCHE PATENTSCHRIFT

(11) **EP 1 259 440 B1**
(45) Veröffentlichungstag und Bekanntmachung des Hinweises auf die Patenterteilung: **21.04.2004**
(21) Anmeldenummer: 01927713.6
(22) Anmeldetag: 28.02.2001
(51) Int. Cl.: B65D 81/32, A61C 5/04

(54) **VORRICHTUNG ZUM LAGERN UND AUSBRINGEN VON SUBSTANZEN**
DEVICE FOR STORING AND DISPENSING SUBSTANCES
DISPOSITIF DE STOCKAGE ET D'ADMINISTRATION DE SUBSTANCES

(30) Priorität: 01.03.2000 DE 10009623
(43) Veröffentlichungstag der Anmeldung: 27.11.2002
(73) Patentinhaber: 3M Espe AG, 82229 Seefeld (DE)
(72) Erfinder: RAIA, Gioacchino, 82229 Seefeld (DE); NOWAK, Reinhold, 82276 Adelshofen (DE); PEUKER, Marc, 86938 Schondorf (DE)
(74) Vertreter: Brem, Roland
(86) Internationale Anmeldenummer: PCT/EP2001/002243
(87) Internationale Veröffentlichungsnummer: WO 2001/064547

(56) Entgegenhaltungen:
- DE-A- 3 122 237
- US-A- 5 616 336

## Beschreibung

Die Erfindung betrifft eine Vorrichtung zum Lagern und Ausbringen, insbesondere von Dentalmaterial, umfassend einen ersten Abschnitt, umfassend eine erste und eine zweite Folie, die mindestens eine erste Kammer zur Aufnahme einer ersten Substanz bilden und eine von der Kammer getrennte Tasche zur Entnahme der ersten Substanz. Der Bereich zwischen erster Kammer und Tasche weist einen selektiv zu öffnenden Durchgangsbereich auf. Die Vorrichtung weist ferner einen zweiten Abschnitt mit einer weiteren Kammer auf, die weder mit der ersten Kammer noch der Tasche des ersten Abschnitts durch einen selektiv zu öffnenden Durchgangsbereich verbunden ist.

Insbesondere im Dentalbereich ist es oftmals erforderlich, eine Vielzahl von Handgriffen nacheinander abgestimmt auszuführen.

Zum Füllen einer Cavität eines Zahnes mit beispielsweise einer Kunststofffüllung ist üblicherweise zunächst ein Primer und im Anschluss daran ein Bonding auf die Zahnhartsubstanz aufzutragen, ggf. zu verblasen, dann ggf. zu belichten, bevor im Anschluss daran die eigentliche Füllung gelegt werden kann.

Während die adhäsiv wirkenden Substanzen Primer und Bonding üblicherweise als Flüssigkeit abgepackt in Flaschen vorliegen, befindet sich das Füllungsmaterial als hochviskoses Material in Schraubtuben oder wird aus sogenannten Compules ausgepresst.

Der eine Füllung legende Zahnarzt hat somit zunächst Primer und Bonding aus der einen Verpackung in Form einer Flüssigkeit und im Anschluss daran, das Füllungsmaterial in Form einer hochviskosen Masse aus einer hiervon verschiedenen Verpackung zu entnehmen.

Der zeitliche Aufwand hierzu ist nicht unerheblich. Hinzu kommt, dass Primer und Bonding des einen Herstellers oftmals nicht auf die chemische Zusammensetzung des Füliungsmaterials eines anderen Herstellers abgestimmt sind, was zu verminderten Haftwerten am Zahn führen kann. Auch beim Öffnen, Ausbringen und der Anwendungsreihenfolge der Substanzen aus den unterschiedlichen Verpackungen sind Bedienungsfehler nicht ausgeschlossen.

Das Lagern und Auftragen von geringen Flüssigkeitsmengen kann beispielsweise in Behältnissen in Form von "Blisterpackungen" erfolgen. In dem von einer abziehbaren Folie verschlossenen tiefgezogenen Teil der Packung sind beispielsweise zwei voneinander getrennte Vertiefungen ausgebildet. Die erste Vertiefung kann eine geringe Flüssigkeitsmenge enthalten, in die andere Vertiefung kann ein Pinsel eingelegt sein.

In WO-96/03326 ist beispielsweise ein Behältnis zum Einmalgebrauch beschrieben, das Mulden zur Aufbewahrung eines Medikaments und eines Applikators aufweist. Beide Mulden sind durch eine peelbare Deckfolie vor Kontamination geschützt. In einer Ausführungsform wird das Medikament durch Drücken auf die das Medikament enthaltende Mulde in die den Applikator enthaltende Mulde überführt um den Applikator zu benetzen.

Beschrieben wird ferner eine Vorrichtung, die über zwei Mulden zur Aufbewahrung von Medikamenten verfügt, die zur Verabreichung eines Medikaments, bestehend aus zwei Komponenten, geeignet ist. Die Mulden können separat geöffnet und wieder verschlossen werden. Das Öffnen und Verschließen der beiden Mulden erfolgt auf die gleiche Art und Weise.

In der US 3,835,834 wird ein Pflegeset offenbart, das zwei Mulden in einem Grundkörper aufweist, die zum einen eine Pflegesubstanz und zum anderen einen Tupfer enthalten. Durch eine Siegelfolie ist der die Pflegesubstanz und den Tupfer enthaltende Grundkörper vor Verschmutzung geschützt.

Aus der EP 0 895 943 A, die die Basis für den Oberbegriff des Anspruchs 1 bildet, ist eine Vorrichtung zum Lagern und Auftragen einer fließfähigen Substanz bekannt, mit einem Behälter aus zwei Folien, die unter Bildung einer Kammer zur Aufnahme der Substanz und einer von der Kammer getrennten Tasche zur Entnahme der Substanz miteinander verbunden sind, wobei die Trennung zwischen der Kammer und der Tasche einen selektiv zu öffnenden Durchgangsbereich aufweist.

Nachteilig an den bekannten Vorrichtungen ist, dass die Vorrichtungen als Substanz oftmals nur ein Vorbehandlungsmittel enthalten, nach dessen Applikation üblicherweise eine weitere Substanz, beispielsweise ein Füllungsmaterial auf die vorbehandelte Stelle aufzubringen ist. Es kann vorkommen, dass das Vorbehandlungsmittel an die Beschaffenheit der weiteren Substanz nicht vollständig angepasst ist. Dies kann zu unbefriedigenden Ergebnissen führen. Die bekannten Vorrichtungen eignen sich nicht zum Lagern und Ausbringen von in ihren rheologischen Eigenschaften unterschiedlichen Substanzen.

Primär kann die Aufgabe der vorliegenden Erfindung darin gesehen werden, eine Vorrichtung bereitzustellen, die die vorgenannten Probleme vermeidet.

Eine weitere Aufgabe kann darin gesehen werden, eine Vorrichtung bereitzustellen, die es ermöglicht, unterschiedliche Substanzklassen innerhalb einer Verpackung zu lagern und geordnet auszubringen.

Eine weitere Aufgabe kann darin gesehen werden, eine Vorrichtung bereitzustellen, die es ermöglicht, sowohl zum einen niederviskose bis flüssige Substanzen als auch hochviskose bis knetbare Substanzen in einer Verpackung zu lagern.

Diese Aufgabe wird durch eine Vorrichtung und ein Verfahren zur Anwendung der Vorrichtung gelöst, wie es in den Ansprüchen beschrieben ist.

Mit den Begriffen "umfassen" oder "enthalten" im Sinne der Erfindung wird eine nicht abschließende Aufzählung von Merkmalen eingeleitet. Der Begriff "ein" ist als unbestimmte Mengenangabe im Sinne "mindestens ein" aufzufassen.

Die Erfindung weist dabei folgende Vorteile auf:

Das Vorhandensein eines zweiten Abschnitts mit einer weiteren Kammer, der mit dem ersten Abschnitt, der mindestens eine erste Kammer aufweist, nicht über einen selektiv zu öffnenden Durchgangsbereich verbindbar ist, ermöglicht die Lagerung mindestens einer weiteren Substanz, die in der Verarbeitungsreihenfolge nach Applikation der ersten Substanz üblicherweise verwendet wird.

Der zweite Abschnitt der Vorrichtung kann mit dem ersten Abschnitt auf irgendeine Art verbunden sein, wobei sichergestellt sein sollte, dass beim Ausbringen der Substanz aus der ersten Kammer des ersten Abschnitts diese nicht in die Kammer des zweiten Abschnitts gelangen kann. Folglich sind die Kammern des ersten Abschnitts mit der oder den Kammern des zweiten Abschnitts nicht durch einen zu öffnenden Durchgangsbereich verbindbar. Zur einfacheren Handhabung der Vorrichtung ist der zweite Abschnitt vorzugsweise vom ersten Abschnitt abtrennbar ausgebildet. Eine Ausbildung des Verbindungsstücks, der ein Abtrennen durch händisches Abreißen ermöglicht, ist besonders günstig. Dies kann beispielsweise durch Perforierung des Verbindungsstücks erreicht werden. Denkbar und möglich ist aber auch jede andere Gestaltung des Verbindungsstücks zwischen den beiden Abschnitten, beispielsweise durch Verkleben mit einer weiteren Folie.

Da die in der weiteren Kammer des zweiten Abschnitts befindliche Substanz üblicherweise an die Beschaffenheit der Substanz in der anderen Kammer des ersten Abschnitts angepasst ist, vermindert dies die Gefahr der Verwendung von mit der ersten Substanz nicht kompatiblen Substanzen.

Weiterhin ist sichergestellt, dass alle in der Vorrichtung gelagerten Substanzen das gleiche Abfülldatum aufweisen, sodass Inkompatibilitäten der Substanzen aufgrund unterschiedlicher Verfallzeiten ausgeschlossen werden können.

Somit ist die Vorrichtung insgesamt einfach in der Handhabung, da sich die erste Substanz, die sich in der ersten Kammer befindet, ohne Komplikationen und aufwendiges Öffnen der Vorrichtung zunächst in die Tasche zur Entnahme überführen lässt. Nach Applikation der Substanz aus der Tasche ist in der gleichen Vorrichtung eine zweite Substanz gelagert und zur Applikation hergerichtet. Die zweite Substanz, die sich üblicherweise in ihrer Konsistenz von der ersten Substanz unterscheidet, ist in einer Kammer gelagert, die auf eine andere Weise zu öffnen ist als die erste Kammer.

Während sich die Substanz, die sich in der ersten Kammer befindet durch Ausübung von Druck auf die Vorrichtung ohne Abziehen einer Deckschicht ausbringen lässt, ist zur Entnahme der zweiten Substanz üblicherweise eine Deckschicht manuell abzuziehen.

Die Vorrichtung zeichnet sich somit dadurch aus, dass sie über zwei Abschnitte mit mindestens je einer Kammer zur Aufnahme je einer Substanz verfügt, die ihrerseits auf unterschiedliche Weise aus der Vorrichtung zu entnehmen sind, wobei die einzelnen Kammern auf unterschiedliche Weise geöffnet werden.

Gegebenenfalls enthalten die Kammern des ersten Abschnitts mindestens ein weiteres Behältnis, vorzugsweise in Form eines Kissens, das sich durch Ausübung von Druck öffnen lässt.

Das Vorhandensein eines separaten Behältnisses zur Aufnahme einer Substanz verhindert, dass die Substanz im Lagerzustand unmittelbar weder mit dem selektiv zu öffnenden Durchgangsbereich noch mit der die Kammer bildenden Folien in Kontakt kommt.

Dadurch wird eine Beschädigung der Vorrichtung, insbesondere der die Vorrichtung bildenden Folien erschwert. Dies ermöglicht eine Verlängerung der Lagerzeit der die Substanz enthaltenden Vorrichtung.

Hierbei hat sich die Verwendung von die Diffusion flüchtiger Substanzen stark beeinträchtigenden oder verhindernden Materialien zur Herstellung des Behältnisses als vorteilhaft erwiesen.

Abhängig vom Material für das Behältnis lassen sich auf diese Weise auch aggressive Substanzen problemlos lagern und handhaben, ohne auf vorteilhafte Eigenschaften von üblicherweise verwendeten Folien, die den Behälter bilden, verzichten zu müssen.

Der Begriff aggressive Substanzen umfasst sowohl ätzende (beispielsweise saure und basische Substanzen) als auch klebrige Substanzen, sowie Lösungsmittel mit kunststoffanlösenden Eigenschaften.

Durch die erfindungsgemäße Vorrichtung ist auch eine sichere Lagerung von insbesondere strahlungsempfindlichen Substanzen möglich. Äußere Strahlung muss nun nach der den Behälter bildenden Folie eine zusätzliche Barriere überwinden, bevor die Strahlung auf die Substanz treffen kann. Unter Strahlung ist jegliche Form natürlicher vorkommender als auch künstlich erzeugter Strahlung zu verstehen. Hierunter fällt zum einen elektromagnetische Strahlung insbesondere im Bereich von 380 bis 520 nm und zum anderen Korpuskelstrahlung insbesondere Betastrahlung.

Die erfindungsgemäße Vorrichtung ermöglicht ferner ein problemloses Öffnen der Kammer durch Lösen der selektiv zu öffnenden Sollbruchstelle. Die gegebenenfalls in der Kammer vorhandene Substanz lässt sich dann in die Tasche zur Entnahme überführen. Gleichzeitig wirkt die erfindungsgemäße Vorrichtung als Dosiergerät zum Ausbringen und Auftragen von durch das Kammervolumen vorgegebenen Mengen der Substanz.

Die erfindungsgemäße Vorrichtung zeichnet sich folglich dadurch aus, dass problematisch zu lagernde Substanzen bzw. Komponenten einer herzustellenden Mischung innerhalb einer Verpackung, insbesondere zur Einmalverwendung, zum Ausbringen bzw. Mischen hergerichtet vorliegen. Insbesondere können beispielsweise drei Komponenten in der Vorrichtung getrennt gelagert werden: im ersten Abschnitt der Vorrichtung zwei Komponenten, die zum Bereiten einer Adhäsiv-Mischung erforderlich sind und im zweiten Abschnitt die dritte Komponente in Form eines Füllungsmaterials, welches in seiner chemischen Zusammensetzung auf die Adhäsiv-Mischung abgestimmt ist.

Die Vorrichtung eignet sich je nach Ausführungsform somit nicht nur zum getrennten Lagern von mehreren Komponenten, sondern auch zum Mischen eines Teils der Komponenten, sowie zum koordinierten Ausbringen der gemischten Komponenten und einer darauf abgestimmten weiteren Komponente, die in ihren rheologischen Eigenschaften üblicherweise von den beiden anderen Komponenten verschieden ist.

Vorteilhaft kann auch sein, wenn eine der Folien, vorzugsweise die nicht tiefgezogene Folie, einen peelbaren Außenschichtbereich und einen Innenschichtbereich aufweist.

Das Vorhandensein eines peelbaren Außenschichtbereichs ermöglicht zunächst ein einfaches zumindest partielles Abziehen eines Folienteils. Dadurch wird zumindest eine die gegebenenfalls eine oder mehrere Substanzen enthaltende Kammer bzw. Kammern sichtbar.

Die Verwendung unterschiedlich beschaffener Folien für den Außenschichtbereich einerseits und die die Kammer bildenden Folien andererseits erlaubt eine vor Ingebrauchnahme der Vorrichtung sichere Lagerung der Substanzen.

Darüber hinaus bleiben die zu mischenden Substanzen im Lagerzustand vor äußeren Einflüssen wie Lichteinfall oder auch ungewollter Druckbelastung besser geschützt.

Ist eine der die Kammer bildenden Folien durchscheinend, kann nach Abziehen des peelbaren Außenschichtbereichs der Mischvorgang und/oder das Entleeren der Kammer beispielsweise optisch verfolgt werden. Dadurch ist ein homogeneres Mischungsergebnis und ein vollständigeres Entleeren der Kammer in die Tasche erreichbar.

Je nach zu applizierender Substanz kann die Innenschicht der Folie, die mit der zu applizierenden Substanz in Kontakt kommt, an die Eigenschaften der Substanz angepasst werden. Dies ermöglicht die Verwendung der Vorrichtung zur Lagerung für eine Vielzahl von in ihrer Reaktivität unterschiedlichen Substanzen, ohne dass das Verfahren zur Herstellung der Vorrichtung insgesamt umgestellt werden muss.

Die Erfindung ermöglicht somit eine sichere und kontaminationsgeschützte Lagerung und Ausbringung von beispielsweise Dentalmaterial.

Die erste und zweite Folie des ersten Abschnitts sind gegebenenfalls Mehrschichtfolien. Sie weisen einen gegebenenfalls peelbaren Außenschichtbereich und einen Innenschichtbereich auf.

Als Folien werden vorzugsweise solche verwendet, die eine ausreichende Diffusionsdichtigkeit aufweisen.

Je nach Beschaffenheit der zu lagernden Substanz sollten die Folien auch beständig gegen aggressive beispielsweise ätzende und/oder Lösungsmitteleigenschaften aufweisende Stoffe sein.

Die Folienbestandteile können gewählt sein aus Kunststoff-, Metall- und keramischen Folien,.

Als Kunststofffolien sind beispielsweise denkbar: PE, PP, PTFE, PET, PA, PBT, PVC, EVA, PVF (Polyvinylfluorid).

Als Metallfolien sind beispielsweise denkbar: Al, Sn, Au, Ag, Fe.

Unter keramischen Folien sind Folien zu verstehen, die beispielsweise eine SiOx-haltige Schicht aufweisen.

Der Folienaufbau ist grundsätzlich beliebig und orientiert sich an der Beschaffenheit der zu lagernden Substanzen.

Als vorteilhaft hat sich ein Folienaufbau mit der Abfolge von außen nach innen PET, Al, PET, PE oder PP, Al, PET, PE, gegebenenfalls auch ohne PET-Folie als Mittelfolie, erwiesen.

Zwischen den Folien können sich ferner adhäsive Zusätze befinden.

Als adhäsive Zusätze sind denkbar: Kaschierkleber oder Extrusionskaschiermedien.

Der gegebenenfalls peelbaren Außenschichtbereich der ersten Folie ist vorzugsweise lichtundurchlässig.

Der Innenschichtbereich der ersten Folie vorzugsweise lichtdurchlässig und gegebenenfalls flexibler als der Außenschichtbereich.

Als vorteilhaft für den Außenschichtbereich hat sich die Abfolge von außen nach innen PET, Al oder PP, Al erwiesen.

Die Vorrichtung umfasst einen ersten Abschnitt, der eine erste Folie beispielsweise in Form Deckfolie und eine zweite Folie beispielsweise in Form einer Tiefziehfolie, wie sie bei herkömmlichen Blisterverpackungen Verwendung findet, umfasst.

Die Folien des ersten Abschnitts sind mit Ausnahme der die Kammer oder die Kammern bildenden Bereiche vorzugsweise flächig miteinander verbunden, insbesondere fest miteinander versiegelt, bis auf den selektiv zu öffnenden Durchgangsbereich.

Die Verbindung der ersten mit der zweiten Folie kann beispielsweise durch Heißsiegeln, Kaltsiegeln, Verkleben oder Ultraschallschweißen mit Sonotroden erfolgen.

Die Vorrichtung lässt sich je nach Ausführungsform auch auf eine einfache Weise herstellen. Die peelbar zu öffnenden Bereiche lassen sich in einem Arbeitsschritt erzeugen, insbesondere durch Einwirken des gleichen Energieeintrags, obwohl sich diese Bereiche auf zwei unterschiedlichen Abschnitten der Vorrichtung befinden.

Ein Mehrschichtaufbau der ersten und zweiten Folie kann durch Laminieren, Kalandrieren, Kaschieren verschiedener Monofolienlagen gegebenenfalls auch durch Bedampfen beispielsweise mit Metallen erreicht werden.

Um die in die Vorrichtung eingebrachten, applizierbaren Substanzen beispielsweise vor Lichteinfall zu schützen, sind die Folien vorzugsweise derart gestaltet, dass sie in einem die Kammer umgebenden Bereich durch zwei in Abstand voneinander angeordnete Siegelnähte miteinander verbunden sind.

Der zweite Abschnitt der Vorrichtung umfasst üblicherweise ebenfalls zwei Folien, üblicherweise eine erste Folie in Form einer Deckfolie und eine zweite Folie in Form einer Tiefziehfolie. Erste und zweite Folie bilden eine Kammer zur Aufnahme einer Substanz. Die Kammer lässt sich insbesondere durch Abziehen der Deckfolie öffnen. Zu diesem Zweck ist die erste Folie vorzugsweise peelbar auf die zweite Folie gesiegelt.

Die erfindungsgemäße Vorrichtung umfasst somit zwei Abschnitte mit Kammern, die jeweils von mindestens zwei Folien gebildet werden, wobei die Folien der einzelnen Abschnitte je nach Ausführungsform auf unterschiedliche Weise miteinander verbunden bzw. versiegelt sind, sodass die einzelnen Kammern auf unterschiedliche Weise zu öffnen sind.

Das oder die gegebenenfalls in der oder den Kammern vorhandenen Behältnisse lassen sich mit den gleichen Verfahren herstellen, die zur Herstellung der Vorrichtung angewandt werden können. Das Behältnis wird dabei vorzugsweise durch Verschweißen, Verkleben oder Versiegeln im Randbereich von kunststoffoder metallhaltigen Folien hergestellt, sodass vorzugsweise ein kissenförmiges Gebilde entsteht. Die Verbindung der Folien erfolgt derart, dass sich das Behältnis durch Einwirkung von äußerem Druck öffnen lässt, wobei das Behältnis bei Druckeinwirkung vorzugsweise ungerichtet aufplatzen soll.

Die Form der Vorrichtung ist grundsätzlich beliebig, vorzugsweise aber an die Beschaffenheit der gelagerten Substanzen angepasst.

Die Kammer oder die Kammern sind vorzugsweise rund (kreisrund oder oval) gegebenenfalls aber auch eckig (quadratisch, rechteckig oder dreieckig) ausgebildet.

Die Kammern weisen ihrem Zweck entsprechend bestimmte Volumen auf, sodass bei vorschriftsmäßiger Anwendung und mehrerer zu vermischender Komponenten eine homogene Durchmischung erfolgen kann. Die der Tasche benachbarte Kammer hat dabei vorzugsweise ein Volumen, das geeignet ist, die gesamte Menge an zu mischender oder gemischter Substanz aufzunehmen.

Eine Kammer weist beispielsweise einen Durchmesser von 5 bis 20 mm auf, das Ausbringinstrument einen Schaftdurchmesser im Bereich von 2 bis 4 mm. Das applizierbare Substanzvolumen liegt üblicherweise im Bereich von wenigen Zehntel Millilitern, bevorzugt im Bereich von 0.03 bis 0.5 ml. Je nach Ausführungsform kann das applizierbare Substanzvolumen aber auch einige Milliliter, insbesondere 5 bis 10 ml betragen.

Die Tasche ist nach einer Seite hin offen und gegebenenfalls so ausgebildet, dass sie ein Ausbringinstrument auch im Lagerzustand aufnehmen kann. Die Tasche kann bei entsprechend kleinem Durchmesser der Taschenöffnung nach außen beispielsweise in Form einer Kanüle aber auch selbst als Applikationsvorrichtung dienen.

Die Trennung zwischen der oder den Kammern und der Tasche ist bezüglich des Abstandes sowie bezüglich der Festigkeit der Haftung so gestaltet, dass sie eine Sollbruchstelle bilden können.

Der Durchgangsbereich ist so beschaffen, dass er im Lagerzustand einen dichten Verschluss bildet sowohl zur Tasche hin als auch zur gegebenenfalls vorhandenen zweiten Kammer.

Eine solche Sollbruchstelle lässt sich beispielsweise durch Kaltsiegeln, Heißsiegeln, Ultraschallschweißen oder Verkleben erreichen, wobei beim Heißsiegeln ein im Vergleich zu den anderen Siegelbereichen unterschiedlicher Energieeintrag, vorzugsweise niedrigerer Energieeintrag erfolgt. Dieser kann über Temperatur, Druck und/oder Haltedauer geregelt werden.

Eine andere Möglichkeit besteht darin, im Bereich der Sollbruchstelle zwischen die erste und die zweite Folie die Haftung herabsetzende Fremdpartikel, wie Peelfolienstanzlinge oder Hotmeltklebepunkte einzubringen. In diesem Fall werden als Ober- und Unterfolie vorzugsweise festversiegelnde Folien eingesetzt.

Das gegebenenfalls vorhandene Applikationsinstrument ist vorzugsweise pinsel- oder tupferartig gestaltet. Ein Applikationsinstrument mit einer kugelförmigen, Bürsten- oder Pinselhaare tragenden Spitze hat sich als günstig erwiesen. Ferner können Pipetten, Wattestäbchen, Schwämme oder Spatel als Applikationsinstrument verwendet werden.

Ferner ist es bei Verwendung eines Applikationsinstrument günstig, wenn die Tasche durch das Applikationsinstrument nach außen abgedichtet wird.

Die Vorrichtung dient vorzugsweise zum Lagern und Ausbringen von Substanzen, insbesondere von geringen Mengen, wie sie beispielsweise im Dentalbereich gehandhabt werden.

Bevorzugt eignet sich die Vorrichtung zum Lagern von aggressiven und/oder lichtempfindlichen Substanzen.

Zum Gebrauch wird zunächst der gegebenenfalls vorhandene Außenschichtbereich zumindest teilweise abgezogen bis die die zu mischenden Substanzen, die sich gegebenenfalls auch in separaten Behältnissen befinden können, enthaltenden Kammern sichtbar werden.

Ferner sind die beiden Folien im Bereich des selektiv zu öffnenden Durchgangsbereich voneinander zu trennen, so dass eine Verbindung zwischen der Kammer und der Tasche hergestellt werden kann.

Ebenfalls ist erforderlich, dass das oder die eine Substanz beinhaltenden gegebenenfalls vorhandenen Behältnisse geöffnet werden.

Vorzugsweise geschieht dies durch äußeren Druck auf die Kammer, beispielsweise zwischen Daumen und Zeigefinger des Benutzers. Dadurch platzt das oder die die Substanz enthaltenden Behältnisse auf. Der sich aufbauende Innendruck in der Kammer führt schließlich zur Öffnung des selektiv zu öffnenden Durchgangsbereichs.

Wenn die Vorrichtung eine erste und eine zweite Kammer aufweist, die über einen selektiv zu öffnenden Durchgangsbereich miteinander verbunden werden können, kann durch abwechselndes Drücken auf die Außenschicht der die Substanzen enthaltenden Kammern ein abwechselndes Hin- und Herbewegen der zu mischenden Substanzen durch die geschaffene selektive Öffnung bewirkt werden, bevor die gemischten Substanzen in die der Kammer benachbarten Tasche überführt werden.

Durch Knicken der Vorrichtung im Bereich zwischen den Kammern lässt sich der oder die selektiv zu öffnenden Durchgangsbereiche wieder verschließen. Ein Zurückfließen der gemischten Substanzen in die andere Kammer ist dann nahezu unmöglich, so dass sich die gemischten Substanzen durch Druckeinwirkung auf den Außenbereich der die Kammer bildenden Folien in die Tasche überführen lassen.

Falls der Innenschichtbereich der ersten Folie durchscheinend ausgebildet ist, lässt sich der Mischvorgang und das Entleeren von Kammer zu Kammer bzw. in die Tasche visuell verfolgen.

Ein sich in der Tasche befindendes oder erst zu diesem oder späteren Zeitpunkt eingebrachtes Ausbringinstrument wird benetzt und kann anschließend zur Applizierung der freigesetzten Substanz verwendet werden.

Denkbar ist auch, dass das Ausbringinstrument in Richtung der Kammer bewegt wird, um den selektiv zu öffnenden Durchgangsbereich zu lösen und gegebenenfalls das oder die sich in der Kammer befindlichen Behältnisse zu öffnen. Hierdurch erfolgt ebenfalls eine Benetzung des Ausbringinstruments.

Ist ein wiederholtes Applizieren der freigesetzten Substanz erforderlich, kann das Ausbringinstrument erneut in die Tasche eingeführt werden.

Vorzugsweise ist die Tasche oder das Ausbringinstrument so gestaltet, dass beim erneuten Einführen des Ausbringinstruments in die Tasche eine Benetzung des äußeren Abschnitts des Ausbringinstruments nicht stattfindet.

Dies kann beispielsweise durch eine kanalförmige Ausbildung der Tasche und eine daran angepasste Ausbildung des Ausbringinstruments erfolgen.

Denkbar ist auch eine schalen- oder wannenförmige Gestaltung des Taschenendes der Tiefziehfolie, in das die Substanz zum wiederholten Benetzen des Applikationsinstruments ohne Schaftbenetzung des Applikationsinstrument gefördert wird.

Gegenstand der vorliegenden Erfindung ist somit auch ein Verfahren zur Verwendung der Vorrichtung, welches folgende Schritte umfasst:
a) Bereitstellen einer Vorrichtung, wie sie oberhalb beschrieben ist,
b) Ausüben von Druck auf die erste Kammer des ersten Abschnitts, wodurch die erste Substanz über den selektiv zu öffnenden Durchgangsbereich in die Tasche überführt wird und das sich gegebenenfalls in dieser Tasche befindliche Applikationsinstrument benetzt,
c) zumindest teilweise Entnahme der ersten Substanz aus der Tasche, üblicherweise mit dem darin befindlichen Applikationsinstrument,
d) gegebenenfalls Auftragen der ersten Substanz auf eine Oberfläche, insbesondere dentales Hartgewebe,
e) Öffnen der zweiten Kammer des zweiten Abschnitts durch Abziehen einer Deckfolie,
f) zumindest teilweise Entnahme der zweiten Substanz aus der zweiten Kammer,
g) gegebenenfalls Auftragen der zweiten Substanz auf die Stelle, die in Schritt d) mit der ersten Substanz benetzt oder in Berührung kam.

Zwischen Schritt a) und b) wird der zweite Abschnitt vom ersten Abschnitt der Vorrichtung gegebenenfalls abgetrennt, um das Applizieren der Substanzen, die sich in den einzelnen Kammern befinden, zu erleichtern.

Die zu applizierenden Substanzen können fließfähig, gegebenenfalls knetbar sein oder auch in Pulverform vorliegen. Vorzugsweise sind die Substanzen polymerisierbar.

Beispiele für polymerisierbare Substanzen umfassen licht- oder radikalisch polymerisierbare Substanzen, wie Acrylsäure, Methacrylsäure, Maleinsäure, sowohl in monomerer als auch in polymerer oder vorpolymerisierter Form, sowie Derivate davon.

Fließfähige Substanzen umfassen alle im Dentalbereich gängigen Flüssigkeiten und Gele, wie Ätzmittel, Primer und Bonding-Mittel und übliche Lösungsmittel.

Die Lösungsmitteln können gewählt sein aus sowohl dipolar protischen als auch dipolar aprotischen Lösungsmitteln. Beispielhaft seien genannt: Aceton, DMF, DMSO, Alkohole, Wasser.

Alle im Dentalbereich gängigen restaurative und/oder prothetische Substanzen, wie Composite, Compomere, Ormocere, Glasionomerzemente, Silikatzemente, Phosphatzemente, beispielsweise in Pasten oder auch in Pulverform, können insbesondere in der Kammer des zweiten Abschnitts der Vorrichtung gelagert und aus dieser ausgebracht werden.

Die Substanzen befinden sich vorzugsweise in dem oder den Behältnissen, gegebenenfalls in dem oder den Behältnissen und gleichzeitig in der das oder die Behältnisse enthaltenden Kammer.

Nachfolgend wird die erfindungsgemäße Vorrichtung anhand von Figuren näher beschrieben:
- Figur 1: Aufsicht auf die Vorrichtung, nachdem der zweite Abschnitt abgetrennt wurde.
- Figur 2: Längsschnitt durch die Vorrichtung mit einer Kammer, die ein Behältnis umfasst, nachdem der zweite Abschnitt abgetrennt wurde.
- Figur 3: Längsschnitt durch die Vorrichtung mit einer Kammer, die zwei Behältnisse umfasst, nachdem der zweite Abschnitt abgetrennt wurde.
- Figur 4: Aufsicht auf die Vorrichtung mit zwei Kammern, nachdem der zweite Abschnitt abgetrennt wurde.
- Figur 5: Längsschnitt durch die Vorrichtung mit zwei Kammern und einem Behältnis, nachdem der zweite Abschnitt abgetrennt wurde.
- Figur 6: Aufsicht auf die Vorrichtung mit drei Kammern, die auf zwei Abschnitten angeordnet sind.
- Figur 7: Längsschnitt durch die Vorrichtung mit zwei Kammern, wobei eine Folie einen peelbaren Außenschichtbereich aufweist, nachdem der zweite Abschnitt abgetrennt wurde.

Die in den Figuren gezeigten Ausführungsbeispiele sind nur beispielhaft. Die einzelnen Ausführungsformen können wahllos miteinander kombiniert werden.

Je nach Anwendung kann es vorteilhaft sein, dass der zweite Abschnitt der Vorrichtung vor dem Aktivieren des ersten Abschnitts der Vorrichtung abgetrennt wird.

Es ist aber auch denkbar, dass die Vorrichtung unabhängig von der Anzahl der Kammern und/oder Behältnisse in den Kammern immer einen zumindest teilweise peelbaren Außenschichtbereich aufweist.

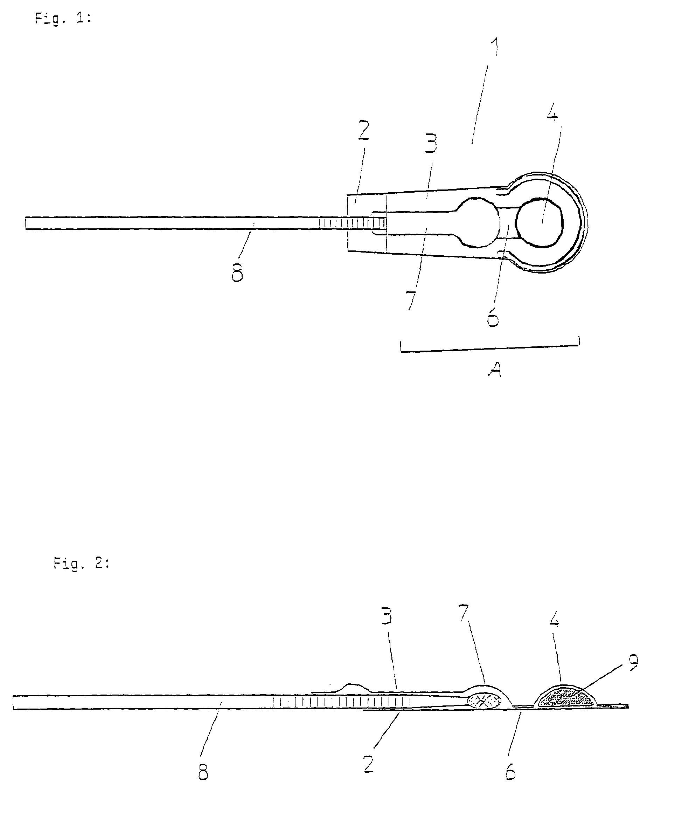

Figur 1 zeigt die erfindungsgemäße Vorrichtung (1) in Aufsicht mit einem ersten Abschnitt (A) mit einer Kammer (4), die von einer ersten (2) und einer zweiten Folie (3) gebildet wird, und einem selektiv zu öffnenden Durchgangsbereich (6) und einer Tasche (7), in der sich ein Ausbringinstrument (8) befindet. Der zweite Abschnitt (B) mit der weiteren Kammer (11) ist nicht zu sehen.

Figur 2 zeigt die erfindungsgemäße Vorrichtung im Längsschnitt mit einem gegebenenfalls eine Substanz enthaltendes Behältnis (9) in der Kammer des ersten Abschnitts. Der zweite Abschnitt (B) mit der weiteren Kammer (11) ist nicht zu sehen.

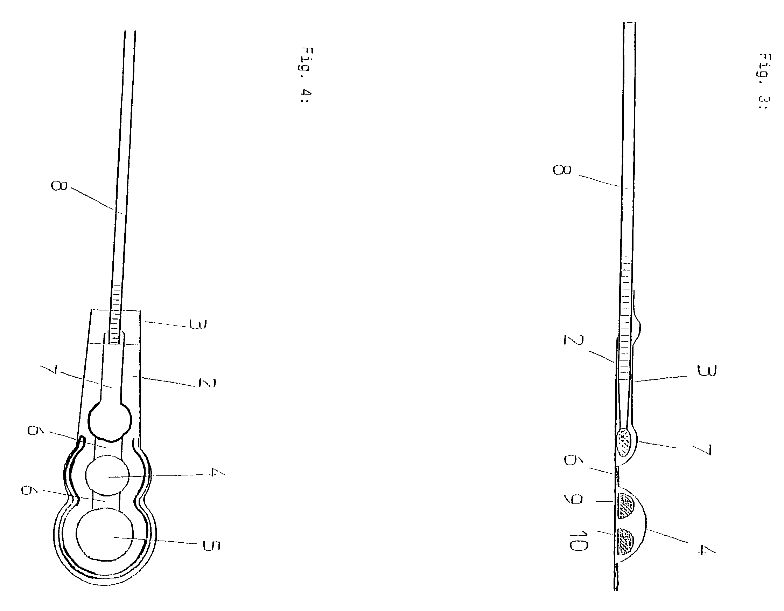

In der in Figur 3 gezeigten Vorrichtung im Längsschnitt enthält die Kammer (4) zwei gegebenenfalls Substanzen enthaltende Behältnisse (9, 10). Der zweite Abschnitt mit der weiteren Kammer (11) ist nicht zu sehen.

Figur 4 zeigt die Vorrichtung wie in Figur 1 mit zwei Kammem (4, 5) in Aufsicht, wobei die Kammern untereinander über einen selektiv zu öffnenden Durchgangsbereich (6) verbunden sind. Der zweite Abschnitt (B) mit der weiteren Kammer (11) ist nicht zu sehen.

In der in Figur 5 gezeigten Ausführungsform weist die Vorrichtung zwei Kammern (4, 5) auf, wobei die Kammern untereinander über einen selektiv zu öffnenden Durchgangsbereich (6) verbunden sind, und wobei die Kammer (5) ein Behältnis (9) enthält. Der zweite Abschnitt (B) mit der weiteren Kammer (11) ist nicht zu sehen.

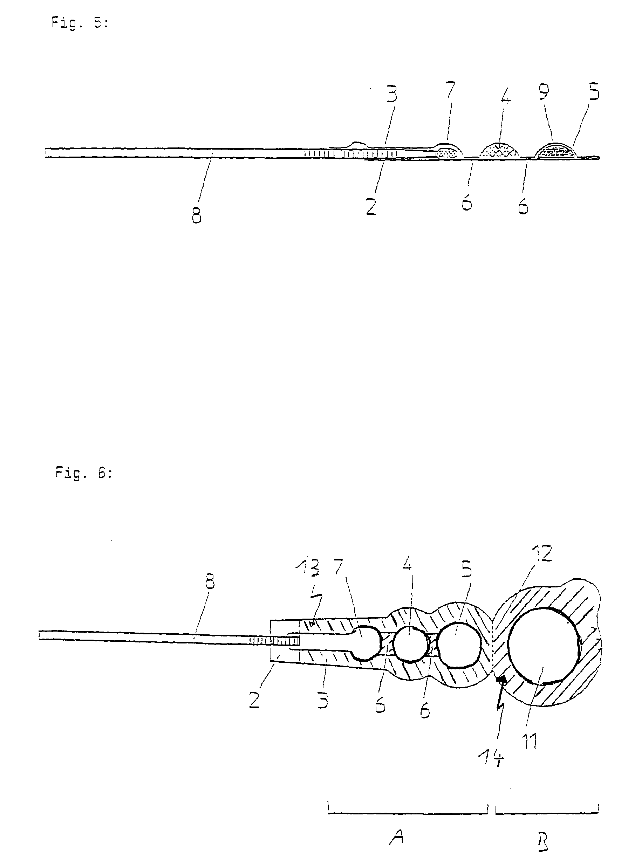

Figur 6 zeigt eine Ausführungsform mit zwei Kammern (4, 5) auf einem ersten Abschnitt (A), die miteinander über einen selektiv zu öffnenden Durchgangsbereich verbunden sind (6) und einer separaten Kammer (11) auf einem zweiten Abschnitt (B). Die separate Kammer (11) ist mit den anderen Kammern nicht über einen selektiv zu öffnenden Bereich verbunden. Die separate Kammer ist in der gezeigten Ausführungsform über eine Perforation (12) von der übrigen Vorrichtung abtrennbar ausgebildet. Die Perforation (12) ermöglicht einerseits gegebenenfalls das vollständige Abtrennen der weiteren Kammer (11), andererseits soll sichergestellt werden, dass beim Öffnen der weiteren Kammer (11) durch Abziehen der Deckfolie nicht die gesamte äußere Folie abgezogen wird. Die die Kammern bildenden Folien sind in den Bereichen (13, 14) auf unterschiedliche Weise miteinander verbunden.

Während im ersten Bereich (13) die Folien miteinander fest versiegelt sind (Schrafur von links nach rechts), sind sie im zweiten Bereich (14) peelbar miteinander versiegelt (Schrafur von rechts nach links).

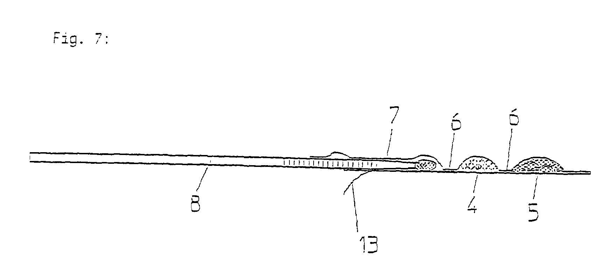

In Figur 7 ist eine Ausführungsform der Vorrichtung im Längsschnitt gezeigt mit zwei Kammem (4, 5), wobei eine der die Vorrichtung bildenden Folien einen peelbaren Außenschichtbereich (13) aufweist. Der zweite Abschnitt mit der weiteren Kammer (11) ist nicht zu sehen.

## Patentansprüche

1. Vorrichtung, umfassend einen ersten Abschnitt (A), umfassend eine erste und eine zweite Folie (2, 3), die mindestens eine erste Kammer (4) zur Aufnahme einer ersten Substanz bilden und eine von der Kammer getrennte Tasche (7) zur Aufnahme der ersten Substanz, wobei die Trennung zwischen der Tasche (7) und der ersten Kammer (4) einen selektiv zu öffnenden Durchgangsbereich (6) aufweist, **dadurch gekennzeichnet, daß** die Vorrichtung einen weiteren Abschnitt (B) mit einer Kammer (11) aufweist, die mit einer Deckfolie verschlossen ist, wobei der zweite Abschnitt (B) mit dem ersten Abschnitt (A) nicht durch einen selektiv zu öffnenden Durchgangsbereich verbunden ist, wobei beim Ausbringen der Substanz aus der ersten Kammer des ersten Abschnitts diese nicht in die Kammer des zweiten Abschnitts gelangen kann, und wobei die erste und zweite Substanz unterschiedlich rheologische Eigenschaften aufweisen.

2. Vorrichtung nach Anspruch 1, wobei sich die Kammer (11) des zweiten Abschnitts (B) durch eine separat peelbare Folie öffnen und gegebenenfalls wieder verschließen lässt.

3. Vorrichtung nach einem der vorhergehenden Ansprüche, wobei der erste Abschnitt (A) eine zweite Kammer (5) zur Aufnahme einer zweiten Substanz aufweist.

4. Vorrichtung nach Anspruch 3, wobei die Trennung zwischen der zweiten Kammer (5) und der ersten Kammer (4) und/oder der Tasche (7) des ersten Abschnitts (A) einen selektiv zu öffnenden Durchgangsbereich (6) aufweist.

5. Vorrichtung nach einem der vorhergehenden Ansprüche, wobei die Tasche (6) zur Aufnahme eines Ausbringinstruments (8) ausgebildet ist.

6. Vorrichtung nach einem der vorhergehenden Ansprüche, wobei ein Ausbringinstrument (8) in der Tasche (6) aufgenommen ist, das einen aus dieser herausragenden Abschnitt aufweist.

7. Vorrichtung nach einem der vorhergehenden Ansprüche, wobei sich in der ersten und/oder gegebenenfalls vorhandenen zweiten Kammer (4, 5) des ersten Abschnitts (A) mindestes ein Behältnis (9) befindet.

8. Vorrichtung nach Anspruch 7, wobei das oder die gegebenenfalls vorhandenen Behältnisse (9) und gegebenenfalls die erste Kammer (4) selbst und die gegebenenfalls vorhandenen weiteren Kammern (5) des ersten und zweiten Abschnitts (A, B) mit Substanzen gefüllt sind.

9. Vorrichtung nach einem der vorhergehenden Ansprüche, wobei die sich in der ersten und/oder zweiten Kammer (4, 5) des ersten Abschnitts (A) befindlichen Substanzen fließfähig und die sich in der weiteren Kammer (11) des zweiten Abschnitts (B) befindliche Substanz pastös und/oder knetbar ist.

10. Vorrichtung nach einem der vorhergehenden Ansprüche, wobei eine der Folien des ersten Abschnitts (2, 3) einen peelbaren Außenschichtbereich und einen Innenschichtbereich aufweist.

11. Vorrichtung nach Anspruch 10, wobei der peelbare Außenschichtbereich nichtdurchscheinend und der Innenschichtbereich der ersten Folie durchscheinend ist.

12. Verwendung der Vorrichtung nach einem der vorhergehenden Ansprüche zum Lagem, gegebenenfalls Mischen und Ausbringung einer fließfähigen Substanz und gegebenenfalls einer pastösen und/oder knetbaren Substanz.

13. Verfahren zur Applikation von mindestens zwei in ihren rheologischen Eigenschaften unterschiedlichen Substanzen, umfassend die Schritte: a) Bereitstellen einer Vorrichtung nach einem der Ansprüche 1 bis 11, b) Ausüben von Druck auf die erste Kammer (4) des ersten Abschnitts (A), wodurch die erste Substanz über den selektiv zu öffnenden Durchgangsbereich (6) in die Tasche (7) überführt wird, c) zumindest teilweise Entnahme der ersten Substanz aus der Tasche (7), d) Öffnen der zweiten Kammer (11) des zweiten Abschnitts (B) durch Abziehen der Deckfolie, e) zumindest teilweise Entnahme der zweiten Substanz aus der zweiten Kammer (11).

14. Verfahren nach Anspruch 13, wobei es sich bei der ersten Substanz um eine Adhäsiv-Mischung oder einen Bestandteil einer Adhäsiv-Mischung handelt und bei der zweiten Substanz um ein in den chemischen Eigenschaften auf die erste Substanz abgestimmtes Füllungsmaterial.

15. Verfahren nach einem der Ansprüche 13 und 14, wobei die erste Substanz durch Mischen zweier Komponenten hergestellt wird, die im ersten Abschnitt der Vorrichtung getrennt voneinander gelagert sind.

## Claims

1. Device comprising a first portion (A) having a first foil (2) and a second foil (3) which form at least a first chamber (4) for receiving a first substance, and a pouch (7) which is separate from the chamber and is used to receive the first substance, the separation between the pouch (7) and the first chamber (4) having a passage area (6) that can be selectively opened, **characterized in that** the device comprises a further portion (B) with a chamber (11) which is closed off with a cover foil, the second portion (B) not being connected to the first portion (A) via a passage area that can be selectively opened, the substance, when being dispensed from the first chamber of the first portion, not being able to pass into the chamber of the second portion, and the first and second substances having different rheological properties.

2. Device according to Claim 1, in which the chamber (11) of the second portion (B) can be opened and, if appropriate, closed again by means of a separately peelable foil.

3. Device according to one of the preceding claims, in which the first portion (A) has a second chamber (5) for receiving a second substance.

4. Device according to Claim 3, in which the separation between the second chamber (5) and the first chamber (4) and/or the pouch (7) of the first portion (A) has a passage area (6) that can be selectively opened.

5. Device according to one of the preceding claims, in which the pouch (6) is designed to receive a dispensing instrument (8).

6. Device according to one of the preceding claims, in which a dispensing instrument is received in the pouch and has a section protruding from the latter.

7. Device according to one of the preceding claims, in which at least one receptacle (9) is present in the first chamber (4) and/or if appropriate in the second chamber (5) of the first portion (A).

8. Device according to Claim 7, in which the receptacle (9) or receptacles (9) optionally present and if appropriate the first chamber (4) itself and the optionally present further chambers (5) of the first portion (A) and second portion (B) are filled with substances.

9. Device according to one of the preceding claims, in which the substances located in the first chamber (4) and/or second chamber (5) of the first portion (A) are free-flowing, and the substance located in the further chamber (11) of the second portion (B) is pasty and/or kneadable.

10. Device according to one of the preceding claims, in which one of the foils of the first portion (2, 3) has a peelable outer layer area and an inner layer area.

11. Device according to Claim 10, in which the peelable outer layer area is opaque and the inner layer area of the first foil is transparent.

12. Use of the device according to one of the preceding claims, for storing and, if appropriate, mixing and dispensing a free-flowing substance and, if appropriate, a pasty and/or kneadable substance.

13. Method for applying at least two substances having different rheological properties, which method comprises the following steps: a) provision of a device according to one of Claims 1 to 11, b) application of pressure to the first chamber (4) of the first portion (A), by which means the first substance is transferred into the pouch (7) via the passage area (6) that can be selectively opened, c) at least partial removal of the first substance from the pouch (7), d) opening the second chamber (11) of the second portion (B) by pulling off the cover foil, e) at least partial removal of the second substance from the second chamber (11).

14. Method according to Claim 13, in which the first substance is an adhesive mixture or a constituent of an adhesive mixture, and the second substance is a filling material adapted in terms of its chemical properties to the first substance.

15. Method according to either of Claims 13 and 14, in which the first substance is produced by mixing two components which are stored separately from one another in the first portion of the device.

## Revendications

1. Dispositif comprenant une première section (A), comprenant un premier et un deuxième film (2, 3), lesquels forment au moins une première chambre (4) pour recevoir une première substance et. une poche (7) séparée de la chambre destinée à recevoir la substance, la séparation entre la poche (7) et la première chambre (4) présentant une zone de passage à ouverture sélective (6), **caractérisé en ce que** le dispositif comprend une autre section (B) dotée d'une chambre (11), laquelle est fermée par un film de protection, la deuxième section (B) n'étant pas reliée à la première section (A) par une zone de passage à ouverture sélective et, lors de l'extraction de la substance de la première chambre de la première section, celle-ci ne pouvant pas passer dans la chambre de la deuxième section, et la première et la deuxième substance présentant des propriétés rhéologiques différentes.

2. Dispositif selon la revendication 1, avec lequel la chambre (11) de la deuxième section (B) peut être ouverte et éventuellement de nouveau fermée par un film pelable séparé.

3. Dispositif selon l'une des revendications précédentes, avec lequel la première section (A) présente une deuxième chambre (5) destinée à recevoir une deuxième substance.

4. Dispositif selon la revendication 3, avec lequel la séparation entre la deuxième chambre (5) et la première chambre (4) et/ou la poche (7) de la première section (A) présente une zone de passage à ouverture sélective (6).

5. Dispositif selon l'une des revendications précédentes, avec lequel la poche (6) est configurée pour recevoir un instrument d'extraction (8).

6. Dispositif selon l'une des revendications précédentes, avec lequel un instrument d'extraction (8) qui présente une section faisant saillie de la poche (6) est logé dans celle-ci.

7. Dispositif selon l'une des revendications précédentes, avec lequel au moins un récipient (9) se trouve dans la première et/ou dans la deuxième chambre éventuellement présente (4, 5) de la première section (A).

8. Dispositif selon la revendication 7, avec lequel le ou les récipients (8) éventuellement présents et le cas échéant la première chambre (4) elle-même et les autres chambres (5) éventuellement présentes de la première et de la deuxième section (A, B) sont remplies avec des substances.

9. Dispositif selon l'une des revendications précédentes, avec lequel les substances qui se trouvent dans la première et/ou deuxième chambre (4, 5) de la première section (A) sont coulantes et la substance qui se trouve dans l'autre chambre (11) de la deuxième section (B) est pâteuse et/ou pétrissable.

10. Dispositif selon l'une des revendications précédentes, avec lequel l'un des films de la première section (2, 3) présente une zone de couche extérieure pelable et une zone de couche intérieure.

11. Dispositif selon la revendication 10, avec lequel la zone de couche extérieure pelable est non transparente et la zone de couche intérieure du premier film est transparente.

12. Utilisation du dispositif selon l'une des revendications précédentes pour stocker, éventuellement mélanger et extraire une substance coulante et éventuellement une substance pâteuse et/ou pétrissable.

13. Procédé d'application d'au moins deux substances ayant des propriétés rhéologiques différentes, comprenant les étapes : a) Mise à disposition d'un dispositif selon l'une des revendications 1 à 11, b) Application d'une pression sur la première chambre (4) de la première section (A), la première substance étant alors transférée dans la poche (7) par le biais de la zone de passage à ouverture sélective (6), c) Prélèvement au moins partiel de la première substance de la poche (7), d) Ouverture de la deuxième chambre (11) de la deuxième section (B) en retirant le film de protection, e) Prélèvement au moins partiel de la deuxième substance hors de la deuxième chambre (11).

14. Procédé selon la revendication 13, avec lequel la première substance est un mélange adhésif ou une composante d'un mélange adhésif et la deuxième substance est un matériau de remplissage accordé sur les propriétés chimiques de la première substance.

15. Procédé selon l'une des revendications 13 et 14, avec lequel la première substance est fabriquée en mélangeant deux composants qui sont stockés séparément dans la première section du dispositif.
